(19) Europäisches Patentamt
European Patent Office
Office européen des brevets

(11) **EP 2 781 001 B1**

(12) **FASCICULE DE BREVET EUROPEEN**

(45) Date de publication et mention
de la délivrance du brevet:
**29.06.2016 Bulletin 2016/26**

(21) Numéro de dépôt: **12791134.5**

(22) Date de dépôt: **14.11.2012**

(51) Int Cl.:
*B60L 3/00* (2006.01)     *B60L 3/04* (2006.01)
*B60L 11/14* (2006.01)    *B60L 11/18* (2006.01)
*H02J 1/00* (2006.01)     *H02J 7/00* (2006.01)

(86) Numéro de dépôt international:
**PCT/EP2012/072607**

(87) Numéro de publication internationale:
**WO 2013/072362 (23.05.2013 Gazette 2013/21)**

(54) **SOURCE DE TENSION CONTINUE INCLUANT DES CELLULES ELECTROCHIMIQUES A NIVEAU DE TENSION ADAPTATIF**

GLEICHSPANNUNGSQUELLE EINSCHLIESSLICH  BRENNSTOFFZELLEN MIT ANPASSUNGFÄHIGEM SPANNUNGSPEGEL

DC POWER SUPPLY INCLUDING ELECTROCHEMICAL CELLS WITH ADAPTABLE VOLTAGE LEVEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.11.2011 FR 1160461**

(43) Date de publication de la demande:
**24.09.2014 Bulletin 2014/39**

(73) Titulaire: **Commissariat à l'Énergie Atomique et aux Énergies Alternatives**
**75015 Paris (FR)**

(72) Inventeurs:
• **CARCOUET, Sébastien**
**38450 Vif (FR)**
• **CHATROUX, Daniel**
**38470 Teche (FR)**
• **DESBOIS-RENAUDIN, Matthieu**
**38250 Villard De Lans (FR)**

(74) Mandataire: **Guérin, Jean-Philippe**
**Innovation Competence Group**
**310 bis avenue Berthelot**
**69008 Lyon (FR)**

(56) Documents cités:
**EP-A2- 2 053 717          WO-A1-2011/114247**
**DE-A1-102009 028 977**

EP 2 781 001 B1

**Description**

L'invention concerne les sources de tension continue de forte puissance, en particulier les sources de tension continue incluant des cellules électrochimiques. De telles sources de tension de forte puissance sont notamment des batteries d'accumulateurs électrochimiques ou des piles à combustible. Celles-ci peuvent par exemple être utilisées dans le domaine des transports électriques et hybrides ou les systèmes embarqués.

Le document EP2053717 décrit un système incluant une batterie haute tension munie de cellules électrochimiques connectées en série et un convertisseur continu/continu connecté en parallèle avec les cellules électrochimiques. La tension aux bornes du convertisseur est donc identique à la tension aux bornes de la batterie. Un ventilateur reçoit une tension d'alimentation variable, l'alimentation du ventilateur permettant d'équilibrer la charge entre les cellules électrochimiques Ce document ne permet pas de moduler le niveau de tension appliqué à une charge de puissance à un coût et une complexité réduits, et un rendement électrique élevé.

Les véhicules hybrides combustion/électrique ou électriques incluent notamment des batteries de forte puissance. De même, les véhicules à piles à combustible incluent des piles à combustible de forte puissance. De telles sources de tension sont utilisées pour entraîner un moteur électrique à courant alternatif par l'intermédiaire d'un onduleur. Les niveaux de tension nécessaires pour de tels moteurs atteignent plusieurs centaines de Volts, typiquement de l'ordre de 400 Volts.

Pour obtenir de fortes puissances et capacités, on place plusieurs groupes d'accumulateurs en série. Le nombre d'étages (nombre de groupes d'accumulateurs) et le nombre d'accumulateurs en parallèle dans chaque étage varient en fonction de la tension, du courant et de la capacité souhaités pour la batterie. L'association de plusieurs accumulateurs est appelée une batterie d'accumulateurs. Les accumulateurs électrochimiques utilisés pour de tels véhicules sont généralement du type lithium ion pour leur capacité à stocker une énergie importante avec un poids et un volume contenus. Les technologies de batterie de type Lithium ion phosphate de fer LiFePO4 font l'objet d'importants développements du fait d'un niveau de sécurité intrinsèque élevé, au détriment d'une densité de stockage d'énergie un peu en retrait. Un accumulateur électrochimique a habituellement une tension nominale de l'ordre de grandeur suivant :

3.3 V pour une technologie lithium-ion phosphate de Fer, LiFePO4,
4.2 V pour une technologie de type lithium-ion à base d'oxyde de cobalt.

Les piles à combustible de forte puissance sont également envisagées comme sources de tension continue pour des véhicules automobiles particuliers ou pour des véhicules de transport en commun. Une pile à combustible est un dispositif électrochimique qui convertit de l'énergie chimique directement en énergie électrique. Du dihydrogène est utilisé comme carburant de la pile à combustible. Le dihydrogène est oxydé sur une électrode de la pile et du dioxygène de l'air est réduit sur une autre électrode de la pile. La réaction chimique produit de l'eau. Le grand avantage de la pile à combustible est d'éviter des rejets de produits nocifs sur le lieu de génération d'électricité.

Une pile à combustible comprend un empilement en série de plusieurs cellules. Chaque cellule génère une tension de l'ordre de 1 Volt, et leur empilement permet de générer une tension d'alimentation d'un niveau plus élevé, par exemple de l'ordre d'une ou plusieurs centaines de volts.

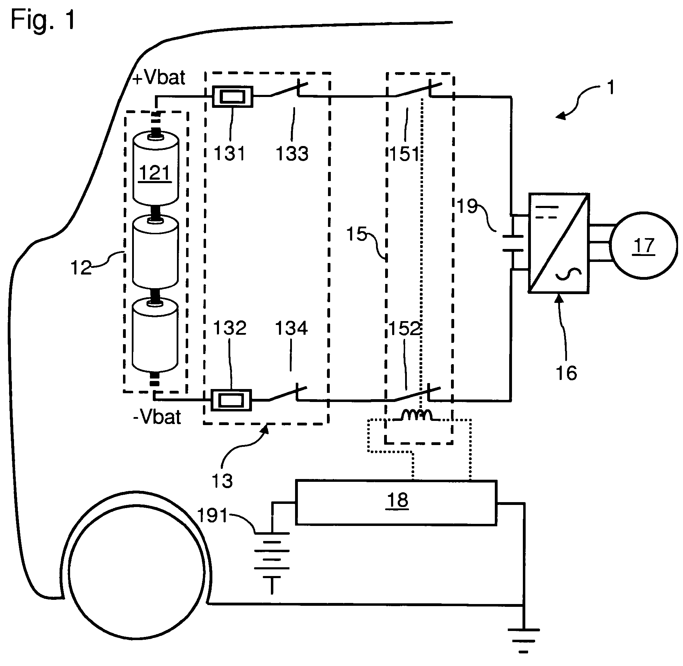

La figure 1 illustre un exemple de véhicule 1 de l'état de la technique incluant une batterie de puissance 12. La batterie 12 inclut des accumulateurs électrochimiques 121 connectés en série, par exemple entre 40 et 150 accumulateurs, en fonction de la tension nécessaire et du type d'accumulateurs utilisé. La batterie 12 applique une tension +Vbat sur une première borne, et une tension -Vbat sur une deuxième borne. Les accumulateurs 121 sont connectés en série par l'intermédiaire de connexions électriques de puissance. Les bornes de la batterie 12 sont connectées à une interface continu d'un onduleur 16. Un moteur électrique 17 est connecté sur une interface alternatif de l'onduleur 16.

La connexion entre les bornes de la batterie 12 et l'interface continu de l'onduleur 16 est réalisée par l'intermédiaire d'un circuit de protection 13 et par l'intermédiaire d'un circuit d'accouplement de puissance 15. Le circuit de protection 13 comprend des fusibles 131 et 132 configurés pour ouvrir la connexion lors d'un court-circuit. Le circuit de protection 13 comprend en outre des sectionneurs 133 et 134 permettant de déconnecter la batterie 12 pour la mettre en sécurité de manière sûre et contrôlable visuellement pour les interventions sur le véhicule 1.

Un circuit d'accouplement de puissance 15 comprend des interrupteurs 151 et 152 permettant de connecter/déconnecter sélectivement les bornes de la batterie 12 à l'interface continu de l'onduleur 16. L'ouverture/fermeture des interrupteurs 151 et 152 est commandée par un circuit de commande 18, réalisé sous la forme d'un calculateur de supervision du fonctionnement de la batterie 12. Le circuit de commande 18 ferme les interrupteurs 151 et 152 seulement lorsque le véhicule est apte à démarrer. Les interrupteurs 151 et 152 peuvent être utilisés pour interrompre l'alimentation du moteur 17 en cas de défauts. Le circuit de commande 18 est typiquement alimenté par l'intermédiaire d'une batterie 191 d'alimentation du réseau de bord du véhicule 1, présentant un niveau de tension très inférieur à celui de la batterie 12.

Un convertisseur continu/continu non illustré assure la conversion de la tension de la batterie 12 vers la tension du réseau de bord du véhicule 1, généralement proche de 12V.

L'onduleur 16 inclut 6 transistors de type IGBT constituant trois bras de commutation et le moteur 17 est directement alimenté par cet onduleur 16. Un condensateur de découplage 19 de quelques centaines de micro-Farad est placé en parallèle avec l'onduleur 16. Ce condensateur 19 sert au découplage de la tension afin de minimiser les fluctuations de la tension d'alimentation causées par la commutation rapide des IGBTs à la fermeture ou à l'ouverture.

L'énergie emmagasinée dans le condensateur 19 est : ½ $CU^2$. Il n'est donc pas possible de fermer directement les contacteurs 151 et 152 sur l'onduleur 16 sous peine d'avoir une surintensité de plusieurs milliers d'ampères du fait de la présence du condensateur 19 initialement déchargé. Une telle surintensité risquerait d'induire une surtension dangereuse pour le matériel, du fait de la surtension provoquée sur le condensateur 19 et sur les IGBTs de l'onduleur 19 par l'inductance parasite de câblage.

Le véhicule 1 inclut donc un système de précharge limitant le courant de charge du condensateur 19 et ne fermant les contacteurs 151 et 152 que lorsque le condensateur 19 est chargé. Le contacteur 152 est fermé en premier sans courant. Le système de précharge est placé en parallèle du contacteur 151 et est constitué d'une résistance et d'un contacteur. La résistance, par exemple une résistance bobinée vitrifiée de précharge, sollicitée brutalement lors de la charge du condensateur. Cette résistance doit être capable de stocker l'énergie thermique perdue sous forme de chaleur et de dissiper cette énergie.

La batterie 12 connaît en pratique des variations de tension durant sa décharge. Par ailleurs, la défaillance d'un accumulateur dans la batterie 12 se traduit par la nécessité de découpler celle-ci de l'onduleur 16 et de procéder à l'arrêt du véhicule 1 qui est alors en panne.

Le véhicule commercialisé par la société Toyota sous la référence commerciale Prius comporte un convertisseur élévateur/abaisseur de tension appliquant une tension stabilisée à l'entrée de l'onduleur, générée à partir de la tension fluctuante fournie par la batterie de puissance. Le convertisseur fonctionne en élévateur lorsque la batterie de puissance alimente l'onduleur et en abaisseur lorsque le moteur électrique fonctionne en génératrice. Dans ce véhicule, la batterie de puissance n'est utilisée que pendant des durées relativement brèves contrôlées par un calculateur, le véhicule bénéficiant du moteur thermique pendant une grande partie du cycle d'utilisation. Le calculateur peut ainsi contrôler l'espacement et la durée des phases de fonctionnement du convertisseur. Un tel convertisseur présente ainsi des exigences de refroidissement, et par conséquent un coût relativement réduits.

Un tel convertisseur peut difficilement être adopté pour un véhicule muni d'un moteur électrique et dépourvu de moteur thermique. En effet, pour un tel véhicule, le convertisseur fonctionne durant l'intégralité du cycle d'utilisation du moteur électrique. Par conséquent, le refroidissement du convertisseur doit être particulièrement bien dimensionné, ce qui nécessite un convertisseur lourd, coûteux, et pouvant occuper environ le tiers du volume de la batterie de puissance, du fait du niveau de puissance effectivement mis en oeuvre dans la batterie.

Par ailleurs, dans certaines applications, les capacités mises en oeuvre dépassent 100kWh. Par exemple, les capacités suivantes peuvent être mises en oeuvre dans des batteries de stockage : 200kWh pour la propulsion d'un bus, entre 100kWh et plusieurs MWh pour un stockage associé à un générateur d'énergie renouvelable, plus de 100kWh pour un stockage de secours dans des centrales thermiques ou des parcs informatiques. Du fait de l'encombrement et de la masse de telles batteries, celles-ci sont généralement constituées de modules indépendants interconnectés en série et/ou en parallèle, ce qui facilite leur fabrication et leur transport. Dans de telles batteries de puissance, la mise en oeuvre d'opérations de maintenance en isolant un ou plusieurs modules, tout en assurant la continuité de service, s'avère particulièrement problématique. Les différents modules présentant des caractéristiques différentes (du fait d'un état de charge, de dispersions de fabrication, d'un âge ou d'une usure différents), ils ne peuvent être connectés directement ensemble par de simples contacteurs. Placer l'ensemble des modules à un même niveau de charge avant de les connecter directement s'avère au mieux une opération complexe, au pire une opération impossible, en particulier durant le fonctionnement de la batterie de puissance. Par conséquent, de tels modules disposent de convertisseurs de puissance respectifs adaptant leur tension de sortie pour assurer leur interconnexion. De tels convertisseurs sont particulièrement coûteux, volumineux et complexes. De plus, de tels convertisseurs doivent intégrer des composants résistant aux niveaux élevés de puissance mise en oeuvre, ce qui induit d'importantes pertes de conduction et de commutation et limite en outre les fréquences de commutation à des niveaux particulièrement bas.

L'invention vise à résoudre un ou plusieurs de ces inconvénients. L'invention porte notamment sur une source de tension continue de puissance selon la revendication 1.

D'autres caractéristiques et avantages de l'invention ressortiront clairement de la description qui en est faite ci-après, à titre indicatif et nullement limitatif, en référence aux dessins annexés, dans lesquels :

- la figure 1 est une représentation schématique d'un exemple de véhicule à moteur électrique alimenté par batterie selon l'état de la technique ;
- la figure 2 est une représentation schématique d'un exemple de source de tension continue selon un mode de réalisation de l'invention ;
- la figure 3 est une représentation schématique d'un premier mode de réalisation de convertisseur ;

- la figure 4 est une représentation schématique d'un deuxième mode de réalisation de convertisseurs ;
- la figure 5 est une représentation schématique d'un troisième mode de réalisation de convertisseur ;
- la figure 6 est une représentation schématique d'un exemple de source de tension continue incluant un convertisseur selon un quatrième mode de réalisation de l'invention ;
- la figure 7 est une représentation schématique d'un cinquième mode de réalisation de convertisseur ;
- la figure 8 est une représentation schématique d'un exemple de source de tension continue selon encore un autre mode de réalisation de l'invention ;
- la figure 9 est une représentation schématique d'un système incluant des sources de tension continue selon l'invention connectées en parallèle ;
- la figure 10 est une représentation schématique d'un autre exemple de source de tension continue selon encore un autre mode de réalisation de l'invention ;
- la figure 11 illustre un exemple de structure d'interrupteurs d'adaptation de la tension de sortie du convertisseur ;
- la figure 12 est une représentation schématique d'une autre variante du premier mode de réalisation de convertisseur;
- la figure 13 est une représentation schématique d'une autre variante du premier mode de réalisation de convertisseur ;
- la figure 14 illustre un autre exemple d'interrupteur ;
- la figure 15 illustre encore un autre exemple d'interrupteur ;
- la figure 16 montre un diagramme tension/courant vu de la charge électrique.

L'invention propose une source de tension continue de puissance. Cette source comprend des premières cellules électrochimiques connectées en série et un convertisseur continu/continu. Une source secondaire de tension continue est connectée sur l'entrée du convertisseur. La sortie du convertisseur est connectée électriquement en série avec lesdites premières cellules électrochimiques.

L'invention permet d'adapter la tension d'un module de batterie à la tension d'autres modules auxquels il doit être connecté en parallèle. L'invention permet par ailleurs d'adapter la tension aux bornes d'un module avec des pertes particulièrement réduites, pour un coût et un encombrement optimisés. En effet, même si on utilise un convertisseur présentant un rendement de conversion relativement réduit, des pertes liées à ce moindre rendement ne s'appliquent que sur la puissance générée par le convertisseur et non à la puissance de la source primaire. Par exemple un tel convertisseur ayant un rendement de 90% pour une puissance de 1kW présentera des pertes de 100W où un convertisseur de plus forte puissance (100kW) aurait un rendement de 98% présenterait lui des pertes de 2kW.

Du fait d'un moindre dimensionnement, un tel convertisseur peut fonctionner à des fréquences de commutation nettement plus élevées. Du fait de niveaux de tension relativement faibles appliqués dans le convertisseur, le convertisseur peut inclure le cas échéant des interrupteurs formés de transistors de type MOS basse tension, de tels transistors étant à la fois peu coûteux et adaptés à une commutation à haute fréquence car beaucoup plus performants que des transistors hautes tensions de même type. Une fréquence de découpage plus élevée présente l'avantage de fortement réduire la taille des composants passifs tels que les inductances et les condensateurs.

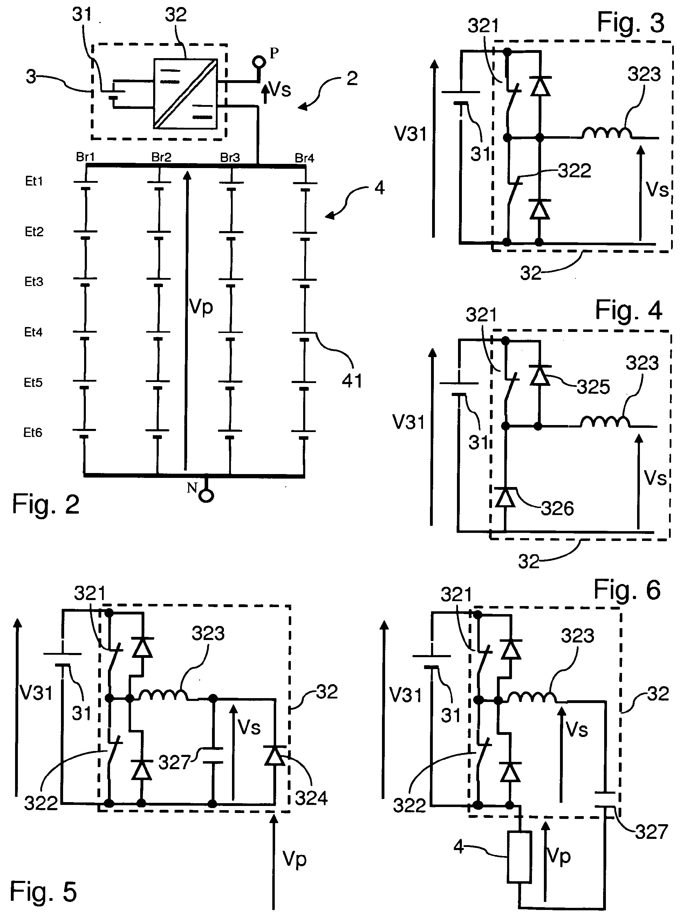

La figure 2 est une représentation schématique d'un exemple de source de tension continue 2 selon un mode de réalisation de l'invention. La source 2 applique ainsi une tension continue entre les bornes P et N. La source de tension continue 2 comprend d'une part un ensemble de cellules électrochimiques connectées électriquement en série sous forme d'une source primaire 4 et un dispositif d'adaptation de tension 3.

La source primaire 4 est en l'occurrence mise en oeuvre sous la forme d'une batterie d'accumulateurs électrochimiques 41. La batterie 4 comprend plusieurs étages d'accumulateurs connectés en série et plusieurs branches d'accumulateurs connectées en parallèle. Dans un souci de simplification, la batterie 4 illustrée comprend quatre branches Br1 à Br4 connectées en parallèle et six étages Et1 à Et6 connectés en série. La batterie 4 peut également comprendre un grand nombre d'accumulateurs 41 connectés en série, typiquement entre 40 et 150 accumulateurs en fonction de la tension nécessaire et du type d'accumulateurs utilisé. La tension aux bornes de la batterie 4 chargée est typiquement de l'ordre de 400 V, par exemple dans le but d'alimenter un moteur électrique d'entraînement d'un véhicule.

Au niveau des bornes de la batterie 4, des collecteurs de puissance sont avantageusement connectés pour être traversés par les courants en parallèle provenant des différentes branches Br1 à Br4. La tension générée aux bornes des branches Br1 à Br4 est identifiée par Vp.

Le dispositif d'adaptation de tension 3 comprend une source secondaire de tension continue 31 et un convertisseur continu/continu 32. La source secondaire de tension continue 31 est en l'occurrence un accumulateur électrochimique. Pour un véhicule automobile, l'accumulateur électrochimique peut être la batterie du réseau de bord du véhicule, comportant une tension nominale généralement de l'ordre de 12V ou 24V. L'accumulateur électrochimique peut être du même type que les accumulateurs électrochimiques 41. La source secondaire de tension continue 31 peut également inclure plusieurs accumulateurs électrochimiques connectés en série et/ou en parallèle. La tension V31 fournie par la source secondaire 31 est appliquée sur l'entrée du convertisseur 32. Le convertisseur continu/continu 32 est configuré pour convertir la tension V31 appliquée sur son entrée en une tension Vs sur sa sortie. Le convertisseur 32 est configuré pour générer une tension Vs distincte de la tension V31 appliquée sur son entrée.

La sortie du convertisseur 31 est connectée électriquement en série avec la batterie 4. La tension continue V2 fournie par la source 2 entre les bornes P et N est donc définie comme : V2 = Vs + Vp

L'invention permet ainsi d'adapter la tension de sortie V2 en réalisant une conversion de tension par le convertisseur 32 sur la base d'une tension d'entrée V31 relativement réduite. Avec une amplitude de tension de conversion relativement réduite, le convertisseur 32 peut profiter d'un dimensionnement relativement réduit de ses composants, par exemple pour ses fonctions de refroidissement, de sorte que son coût et son encombrement restent raisonnables. Les pertes par effet Joule sont également réduites, seule une partie de la tension V2 étant générée par le convertisseur 32.

L'invention permet également de réaliser une adaptation de tension pour différentes sources de tension continue devant être connectées en parallèle, et ce même si ces différentes sources présentent des caractéristiques différentes (du fait d'un état de charge, de dispersions de fabrication, d'un âge ou d'une usure différents).

La tension aux bornes de la source primaire 4 est avantageusement entre 4 et 20 fois supérieure à la tension aux bornes de la source secondaire 31. Ainsi, la modulation de tension s'effectue sur une plage de tension relativement réduite par rapport à la tension nominale de la source primaire 4. L'invention s'avère particulièrement avantageuse pour des sources primaires 4 dont la tension nominale est supérieure à 100 V.

La figure 3 illustre un premier mode de réalisation d'un convertisseur 32. Le convertisseur 32 comprend deux interrupteurs 321 et 322 connectés en série et commandés par un circuit de commande non illustré. Le convertisseur 32 comprend une inductance 323 connectée à un noeud de connexion entre les interrupteurs 321 et 322. L'inductance 323 est connectée entre ce noeud de connexion et la borne de sortie P. Les bornes de l'accumulateur 31 sont connectées au noeud de connexion par l'intermédiaire respectivement de l'interrupteur 321 et de l'interrupteur 322. La tension de sortie Vs est appliquée entre la borne de sortie P et l'anode de l'accumulateur 31, destinée à être connectée à la batterie 4.

On désigne par α le rapport cyclique de fermeture de l'interrupteur 321 défini par le circuit de commande. Le circuit de commande définit un rapport cyclique de fermeture de l'interrupteur 322 de (1-α). De façon connue en soi, le circuit de commande maintient l'interrupteur 321 ouvert et l'interrupteur 322 fermé en simultané, et réciproquement.

En mode de décharge de l'accumulateur 31 (le convertisseur 32 fournit du courant à une charge externe), la tension de sortie Vs se définit donc par :

$$Vs = \alpha * V31$$

Le circuit de commande peut définir une valeur de consigne pour la tension Vs. Le rapport cyclique α est alors défini en fonction de cette valeur de consigne.

Le convertisseur 32 est donc abaisseur de tension en mode de décharge de l'accumulateur 31, lorsque le courant va de V31 à Vs.

Le convertisseur 32 est donc élévateur de tension en mode de charge de l'accumulateur 31, lorsque le courant va de Vs à V31.

La figure 4 illustre un deuxième mode de réalisation d'un convertisseur 32. Le convertisseur 32 comprend une inductance 323 connectée entre un noeud de connexion et la borne de sortie P. L'interrupteur 321 est connecté entre la cathode de l'accumulateur 31 et le noeud de connexion. L'interrupteur 321 est commandé par un circuit de commande non illustré. Une diode 325 est également connectée (en parallèle de l'interrupteur 321) entre la cathode de l'accumulateur 31 et le noeud de connexion. Une diode 326 est connectée entre l'anode de l'accumulateur 31 et le noeud de connexion. La tension de sortie Vs est appliquée entre la borne de sortie P et l'anode de l'accumulateur 31, destinée à être connectée à la batterie 4.

Ce mode de réalisation permet de limiter le nombre d'interrupteurs commandés par le circuit de commande. On désigne par α le rapport cyclique de fermeture de l'interrupteur 321 défini par le circuit de commande.

En mode de décharge de l'accumulateur 31 (le convertisseur 32 fournit du courant à une charge externe), la tension de sortie Vs se définit donc par :

$$Vs = \alpha * V31$$

Le convertisseur 32 est donc abaisseur de tension en mode de décharge de l'accumulateur 31.

En mode de charge de l'accumulateur 31, la tension de sortie Vs se définit par :

$$Vs = V31$$

Avantageusement, la diode de roue libre 326 présente un paramètre $I^2t$ supérieur à celui d'un éventuel fusible disposé en série avec la source de tension 2, pour ne pas être détruite lors d'un court-circuit

Lorsque l'accumulateur 31 est du même type que les accumulateurs 41, sa connexion à l'entrée du convertisseur 32 va induire des niveaux de charges et de décharge différents de ceux des accumulateurs 41. En effet, la tension V31 est différente de la tension aux bornes de chacun des étages Et1 à Et6, du fait d'un rapport cyclique de fermeture α différent de 1 de l'interrupteur 321. Ce déséquilibre de charge n'est pas problématique puisque le convertisseur 32 est conçu pour que la tension V2 soit adaptée au niveau souhaité.

La figure 5 illustre un troisième mode de réalisation d'un convertisseur 32. Le convertisseur 32 comprend une inductance 323 connectée entre un noeud de connexion et la borne de sortie P. L'interrupteur 321 est connecté entre la cathode de l'accumulateur 31 et le noeud de connexion. L'interrupteur 322 est connecté entre l'anode de l'accumulateur 31 et le noeud de connexion. Les interrupteurs 321 et 322 sont commandés par un circuit de commande non illustré. Une diode 324 est connectée entre la borne de sortie P et l'anode de l'accumulateur 31. Un condensateur 327 est avantageusement connecté en parallèle de la diode 324. Le condensateur 327 permet de réaliser un filtrage sur la tension de sortie Vs. La diode 324 permet d'éviter l'apparition d'une forte tension négative due à la batterie 4. Le dimensionnement du condensateur 327 peut ainsi être déterminé seulement en fonction de la tension de sortie Vs.

Le circuit de commande définit un rapport cyclique $\alpha$ de fermeture de l'interrupteur 321. Le circuit de commande définit un rapport cyclique de fermeture de l'interrupteur 322 de (1-$\alpha$). De façon connue en soi, le circuit de commande maintient l'interrupteur 321 ouvert et l'interrupteur 322 fermé en simultané, et réciproquement.

Avantageusement, la diode de roue libre 324 présente un paramètre $I^2t$ supérieur à celui d'un éventuel fusible disposé en série avec la source de tension 2, pour ne pas être détruite lors d'un court-circuit.

La figure 6 illustre un quatrième mode de réalisation d'un convertisseur 32. Le convertisseur 32 comprend une inductance 323 connectée entre un noeud de connexion et la borne de sortie P. L'interrupteur 321 est connecté entre la cathode de l'accumulateur 31 et le noeud de connexion. L'interrupteur 322 est connecté entre l'anode de l'accumulateur 31 et le noeud de connexion. Les interrupteurs 321 et 322 sont commandés par un circuit de commande non illustré. Un condensateur 327 est avantageusement connecté entre les bornes de sortie P et N. Le condensateur 327 permet de réaliser un filtrage sur la tension de sortie V2.

Le circuit de commande définit un rapport cyclique $\alpha$ de fermeture de l'interrupteur 321. Le circuit de commande définit un rapport cyclique de fermeture de l'interrupteur 322 de (1-$\alpha$). De façon connue en soi, le circuit de commande maintient l'interrupteur 321 ouvert et l'interrupteur 322 fermé en simultané, et réciproquement.

Les modes de réalisation de convertisseurs 32 des figures 3 à 6 fonctionnent en abaisseur de tension en mode de décharge de l'accumulateur 31. En mode de décharge, l'adaptation de tension entre des sources de tension continue selon l'invention connectées en parallèle est ainsi réalisée par abaissement de tension. On privilégiera un tel convertisseur 32 afin de moins solliciter l'accumulateur 31 lors d'une adaptation de tension.

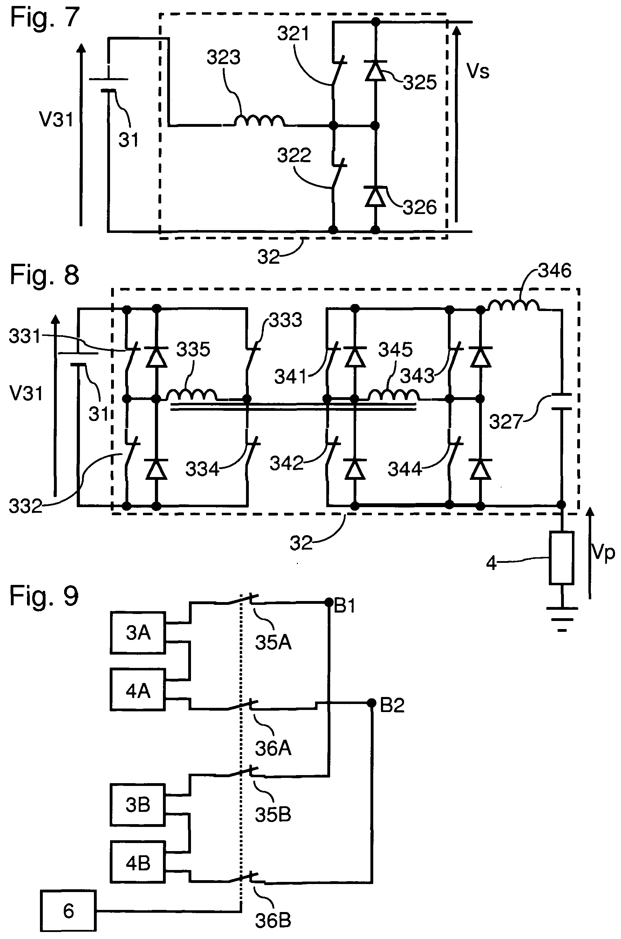

La figure 7 illustre un cinquième mode de réalisation de convertisseur 32 fonctionnant en élévateur de tension en mode de décharge de leur accumulateur 31. Le convertisseur 32 comprend une inductance 323 connectée entre la cathode de l'accumulateur 31 et un noeud de connexion. L'interrupteur 321 est connecté entre le noeud de connexion et la borne P. Une diode 325 est connectée en parallèle de l'interrupteur 321. L'interrupteur 322 est connecté entre le noeud de connexion et l'anode de l'accumulateur 31. Une diode 326 est connectée en parallèle de l'interrupteur 322. Les interrupteurs 321 et 322 sont commandés par un circuit de commande non illustré.

Le circuit de commande définit un rapport cyclique $\alpha$ de fermeture de l'interrupteur 321. Le circuit de commande définit un rapport cyclique de fermeture de l'interrupteur 322 de (1-$\alpha$). De façon connue en soi, le circuit de commande maintient l'interrupteur 321 ouvert et l'interrupteur 322 fermé en simultané, et réciproquement.

En mode de décharge, l'adaptation de tension entre de telles sources de tension continue selon l'invention connectées en parallèle est ainsi réalisée par élévation de tension.

En mode de charge, l'adaptation de tension entre de telles sources de tension continue selon l'invention connectées en parallèle est ainsi réalisée par abaissement de tension.

Dans les modes de réalisation de convertisseur 32 illustrés, l'inductance 323 permet de limiter la variation d'intensité en cas de court-circuit. Afin d'éviter une saturation, l'inductance 323 sera avantageusement une inductance à air.

Avantageusement, le convertisseur 32 inclut un transformateur à isolation galvanique. Un exemple d'un tel convertisseur 32 est illustré à la figure 8, intégré dans une source de tension continue. Un tel transformateur est avantageusement utilisé pour un accumulateur 31 formé de la batterie du réseau de bord d'un véhicule automobile. Le transformateur à isolation galvanique comprend un primaire connecté à l'accumulateur 31 et un secondaire connecté à la batterie 4.

Le primaire inclut une inductance 335 formée d'un enroulement primaire et connectée entre un premier noeud de connexion et un deuxième noeud de connexion. Un interrupteur 331 est connecté entre le premier noeud de connexion et la cathode de l'accumulateur 31. Un interrupteur 332 est connecté entre le premier noeud de connexion et l'anode de l'accumulateur 31. Un interrupteur 333 est connecté entre le deuxième noeud de connexion et la cathode de l'accumulateur 31. Un interrupteur 334 est connecté entre le deuxième noeud de connexion et l'anode de l'accumulateur 31.

Le secondaire inclut une inductance 345 formée d'un enroulement secondaire et connectée entre un troisième noeud de connexion et un quatrième noeud de connexion. Un interrupteur 341 est connecté entre le troisième noeud de connexion et une première borne d'une inductance 346. La seconde borne de l'inductance 346 est connectée à une première électrode d'un condensateur 327. Un interrupteur 342 est connecté entre le troisième noeud de connexion et une deuxième électrode du condensateur 327. Un interrupteur 343 est connecté entre le quatrième noeud de connexion et la première borne de l'inductance 346. Un interrupteur 344 est connecté entre le quatrième noeud de connexion et la deuxième électrode du condensateur 327.

On peut envisager un convertisseur 32 de type Boost, permettant par exemple d'obtenir une tension Vs jusqu'à quatre fois supérieure à la tension V31. Dans ce cas, l'inductance 346 est avantageusement disposée en entrée, entre la cathode de l'accumulateur 31 et le point commun des interrupteurs 331 et 333.

La figure 9 est une représentation schématique d'un système incluant des sources de tension continue selon l'invention connectées en parallèle. Une première source de tension continue comprend un dispositif d'adaptation de tension 3A et une batterie 4A connectés en série. Une deuxième source de tension continue comprend un dispositif d'adaptation de tension 3B et une batterie 4B connectés en série. Les sources de tension continue sont connectées en parallèle à des bornes B1 et B2 par l'intermédiaire de contacteurs 35A, 36A, 35B et 36B. Un circuit de supervision 6 commande les ouvertures/fermetures des contacteurs 35A, 36A, 35B et 36B. Le circuit de supervision 6 fournit également des consignes de tension aux première et deuxième sources de tension. Les circuits de commande des première et deuxième sources de tension commandent les dispositifs d'adaptation de tension 3A et 3B de sorte que les première et deuxième sources de tension aient une tension de sortie correspondant aux consignes de tension du circuit de supervision. Les circuits de commande disposent à cet effet d'une mesure de la tension aux bornes de leur source de tension.

Dans les exemples illustrés, la source de tension secondaire 31 est un accumulateur électrochimique et la source de tension primaire 4 est une batterie d'accumulateurs électrochimiques. On peut également envisager :

- que la source de tension primaire inclut plusieurs modules connectés en série, chaque module comprenant plusieurs accumulateurs connectés en série ;
- que la source de tension secondaire inclut au moins un module (par exemple du même type que les modules connectés en série) comprenant plusieurs accumulateurs connectés en série.

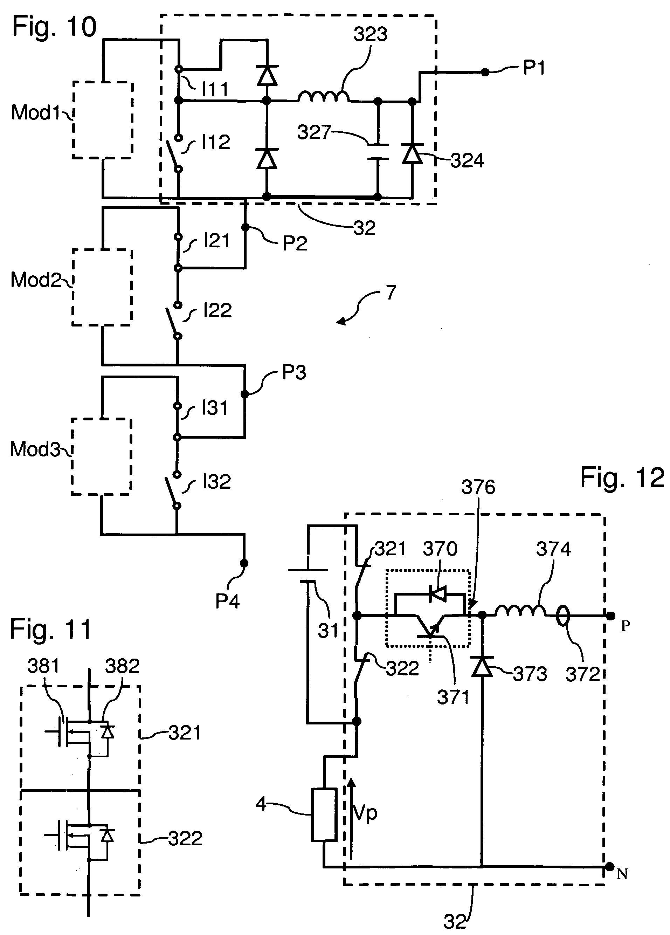

Dans l'exemple de la figure 10, un système 7 comprend plusieurs modules Mod1, Mod2 et Mod3. Chaque module comprend plusieurs accumulateurs connectés en série. Les modules Mod2 et Mod3 sont connectés en série pour former une source de tension primaire. Le module Mod1 est utilisé comme source de tension secondaire.

Le module Mod2 est connecté entre les pôles P2 et P3 et le module Mod3 est connecté entre les pôles P3 et P4. Le système comprend un circuit d'isolation pour chacun des modules Mod2 et Mod3 et un régulateur 32 pour le module Mod1.

Chaque circuit d'isolation comprend deux branches connectées en parallèle. Une première branche inclut un interrupteur configuré pour être normalement ouvert, en série avec un module Mod. Une deuxième branche de dérivation inclut un interrupteur configuré pour être normalement fermé.

Ainsi, le module Mod2 est connecté en série avec l'interrupteur I21 dans une première branche entre les pôles P2 et P3 et une deuxième branche de dérivation inclut l'interrupteur I22. Le module Mod3 est connecté en série avec l'interrupteur I31 dans une première branche entre les pôles P3 et P4 et une deuxième branche de dérivation inclut l'interrupteur I32.

Les interrupteurs I21 et I31 sont configurés pour ouvrir/fermer sélectivement la branche incluant respectivement les modules Mod2 et Mod3. Les interrupteurs I22 et I32 sont configurés pour ouvrir/fermer sélectivement la branche de dérivation. La fermeture des interrupteurs I21 et I31 est commandée par un circuit de commande non illustré. En l'absence de signal de commande appliqué par le circuit de commande, les interrupteurs I21 et I31 sont maintenus ouverts afin d'isoler automatiquement respectivement les modules Mod2 et Mod3 en cas de dysfonctionnement. La fermeture des interrupteurs I22 et I32 est commandée par défaut par la tension entre les bornes respectives des modules Mod2 et Mod3. Ainsi, la présence normale d'une tension entre les bornes des modules Mod2 et Mod3 maintient les interrupteurs I22 et I32 fermés, ce qui assure le court-circuitage des modules Mod2 et Mod3 par défaut en cas de dysfonctionnement. L'ouverture des interrupteurs I22 et I32 doit être commandée de façon active par le circuit de commande afin d'appliquer la tension de chaque module entre ses pôles respectifs et le connecter en série avec un autre module.

Dans la configuration illustrée, en l'absence de dysfonctionnement dans les modules Mod2 et Mod3, ceux-ci sont connectés en série par la fermeture des interrupteurs I21 et I31 et l'ouverture des interrupteurs I22 et I32.

Le convertisseur 32 comprend une inductance 323 connectée entre un noeud de connexion et le pôle P1. Un interrupteur normalement ouvert I11 est connecté entre la cathode du module Mod1 et le noeud de connexion. Un interrupteur normalement fermé I12 est connecté entre l'anode du module Mod1 et le noeud de connexion. Les interrupteurs I11 et I12 sont commandés par le circuit de commande non illustré. Une diode 324 est connectée entre le pôle P1 et l'anode du module Mod1 (connectée au pôle P2). Un condensateur 327 est avantageusement connecté en parallèle de la diode 324. Le condensateur 327 permet de réaliser un filtrage sur la tension de sortie du convertisseur 32. La diode 324 permet d'éviter l'apparition d'une forte tension négative due à la batterie 4. Le dimensionnement du condensateur 327 peut ainsi être déterminé seulement en fonction de la tension de sortie du convertisseur 32.

Le circuit de commande définit un rapport cyclique $\alpha$ de fermeture de l'interrupteur I11. Le circuit de commande définit un rapport cyclique de fermeture de l'interrupteur 112 de $(1-\alpha)$. De façon connue en soi, le circuit de commande maintient l'interrupteur I11 ouvert et l'interrupteur 112 fermé en simultané, et réciproquement.

En utilisant des modules Mod1, Mod2 et Mod3 de même type (même nombre d'accumulateurs en série, même nombre de branches en parallèle, mêmes types d'accumulateurs) des transistors I11, I21 et I31 peuvent être utilisés et des transistors 112, I22 et I32 peuvent être utilisés. Les interrupteurs I11, 121, I31, I12, I22 et I32 peuvent être des transistors de type MOSFET, qui peuvent aisément être dimensionnés de façon appropriée à un coût relativement réduit. Les transistors I11, 121, 131, I12, I22 et I32 peuvent être de type nMOS.

En prenant comme exemple un système 7 incluant onze modules en série avec un dispositif d'adaptation incluant un module, chaque module comprenant 8 cellules lithium fer phosphate, chaque module génère une tension nominale de 26,4 V (tension nominale de 3,3 V pour une cellule lithium-ion de type lithium fer phosphate), la tension nominale du système est approximativement de 317 V. La tension minimale d'une cellule étant de 2,5 V, la tension minimale du système 7 et de 240 V. La différence de tension entre l'état chargé et déchargé du système est donc de 77 V, soit 2,9 fois la tension du module inclus dans le dispositif d'adaptation en tension. Ainsi, un convertisseur de type boost configuré pour élever au maximum la tension de son module d'un facteur 4 s'avère approprié pour compenser la différence de tension de fonctionnement. En effet, on considère que pour une bonne utilisation de la surface de semi-conducteur (servant à la réalisation de transistor Mosfet), un rapport d'élévation de 4 est l'optimum pour un convertisseur boost. Pour un rapport d'élévation supérieur il sera privilégié des convertisseurs basés sur un transformateur.

Les disjoncteurs électromécaniques de courant continu disponibles ont un pouvoir de coupure limité au maximum à 100kA. Dans certaines architectures de très fortes capacités, des batteries Li-ion en parallèle peuvent générer un courant de court-circuit bien plus important du fait de leur très faible résistance interne.

De ce fait, il est impératif de pouvoir limiter le courant de court-circuit de la batterie en deçà des valeurs acceptables par le disjoncteur placé en série avec la batterie, pour garantir son ouverture de façon sécuritaire. Par ailleurs, le courant de court-circuit doit être suffisant pour permettre une ouverture assez rapide pour protéger les différents composants tout en assurant la sélectivité du réseau de distribution électrique.

Lorsque la charge électrique comprend en fait un réseau de distribution comprenant une arborescence de plusieurs disjoncteurs à courants nominaux distincts, la gestion des différents niveaux de courants nominaux rend les dimensionnements respectifs des disjoncteurs particulièrement délicats. Pour assurer la continuité de service, seul le disjoncteur associé à une partie défaillante du réseau doit s'ouvrir. Le disjoncteur amont ne doit pas s'ouvrir pour ne pas arrêter des parties d'installation qui ne sont pas en défaut.

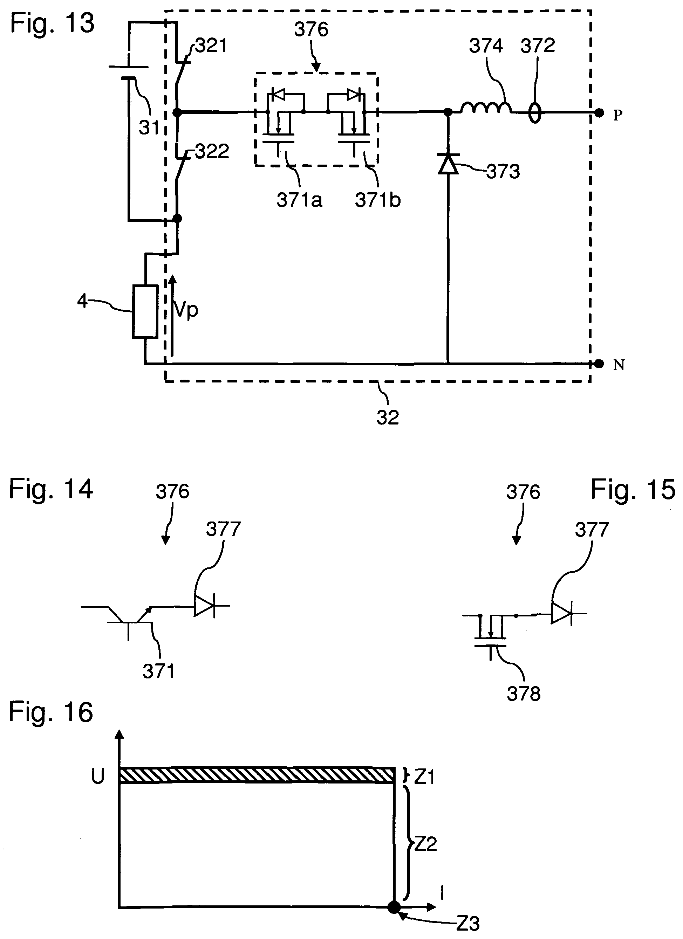

Les figures 12 et 13 illustrent des variantes du premier mode de réalisation destinées à résoudre cette problématique. Dans ces variantes, le convertisseur 32 reprend les deux interrupteurs 321 et 322 connectés en série (de préférence des interrupteurs normalement ouverts), commandés par le circuit de commande, et incluant typiquement des transistors MOS. Le convertisseur 32 reprend également les bornes de l'accumulateur 31 connectées au noeud de connexion entre les interrupteurs 321 et 322. Comme pour le convertisseur de la figure 3, la tension de sortie délivrée par le convertisseur est définie par le rapport cyclique $\alpha$ de fermeture de l'interrupteur 321.

La figure 11 illustre un exemple de structure pour les interrupteurs 321 et 322. Les interrupteurs 321 et 322 comprennent chacun un transistor 381 (en l'occurrence un transistor Mosfet, dont la diode parasite en parallèle est identifiée par la référence 382).

Dans l'exemple de la figure 12, le convertisseur 32 comprend une inductance 374 connectée entre le noeud de connexion et la borne de sortie P par l'intermédiaire d'un interrupteur commandé 376 (de préférence un interrupteur normalement fermé). L'interrupteur commandé 376 comprend d'une part un transistor 371 (en l'occurrence un transistor bipolaire ou un IGBT) et une diode 370 connectés en antiparallèle. L'inductance 374 est dimensionnée pour ne pas saturer lorsqu'elle est soumise à un courant de court-circuit, ou alors pour saturer légèrement avec une valeur pour la régulation en courant à faible intensité et une autre valeur pour l'intensité de court-circuit une fois la légère saturation atteinte.

Le convertisseur 32 inclut une diode de roue libre 373, dont l'anode est connectée à la borne de sortie N, et dont la cathode est connectée à un noeud reliant l'inductance 374 et l'interrupteur 376. Le convertisseur 32 comprend en outre une sonde de courant 372 mesurant le courant traversant l'interrupteur 376 ou l'inductance 374.

En régime nominal, l'interrupteur 376 reste fermé, le fonctionnement étant alors identique au convertisseur 32 de la figure 3. Le dimensionnement des interrupteurs 321 et 322 reste inchangé, la tension aux bornes de ces interrupteurs étant seulement la tension de l'accumulateur 31.

En régime de court-circuit, le circuit de commande détecte l'augmentation du courant par l'intermédiaire de la sonde 372. Le circuit de commande passe alors en mode court-circuit. Le circuit de commande contrôle alors le transistor 371 en modulation de largeur d'impulsion pour réguler le courant fourni à la borne P. Durant les phases d'ouverture du transistor 371, la diode de roue libre 373 est conductrice. Le courant traversant le disjoncteur 375 est par exemple maintenu par le circuit de commande à un niveau inférieur au pouvoir de coupure du disjoncteur 375. La structure d'un tel interrupteur 376 utilisé pour mettre en oeuvre la limitation du courant de court-circuit est particulièrement simple, et nécessite uniquement le dimensionnement de la diode 373 et de l'interrupteur 376 pour supporter la différence de potentiel entre les bornes P et N.

Un tel convertisseur 32 met en oeuvre cette fonction avec des pertes par dissipation relativement réduites. D'une part, les pertes dans les interrupteurs basse tension 321 et 322 sont relativement réduites. D'autre part, les pertes dans l'interrupteur 376 sont relativement faibles en régime nominal lorsque celui-ci est en permanence fermé et que la diode de roue libre 373 est non conductrice.

On peut donner un exemple de calcul de pertes pour un cas pratique en régime nominal. En partant par hypothèse d'une source primaire 4 de type 400V-40kW (et ayant donc une intensité nominale de 100A). La source primaire 4 comprend une dizaine de modules de 4kW connectés en série. Un module de 4kW est utilisé comme accumulateur 31. En estimant le rendement d'un convertisseur 32 d'une puissance de 4kW à environ 90%, les déperditions dans le convertisseur 32 sont de l'ordre de 400W. L'interrupteur 376 inclut ici un IGBT en remplacement du transistor 371 et de la diode 370. Les déperditions dans l'interrupteur 376 en régime nominal seraient d'environ 200W (typiquement 2V sous 100A pour un IGBT). Les déperditions en régime nominal seraient alors de 600W.

Par comparaison, le rendement d'un convertisseur de 40kW de l'état de la technique peut être estimé à 95%, soit 2kW de pertes.

Le choix de l'interrupteur 376 se fait avantageusement en fonction du niveau de courant nominal de la source primaire 4 notamment, car pour une source primaire ne devant pas fournir de forte puissance, l'utilisation d'un transistor Mosfet surdimensionné peut être préférable à celle d'un IGBT ayant une chute de tension quasi-constante.

Un tel convertisseur 32 offre également la possibilité de précharger des condensateurs dans un onduleur connecté aux bornes P et N, en utilisant l'interrupteur 376 et la diode de roule libre 373 en commutation pendant une phase de précharge.

Dans l'exemple des figures 11 et 12, les diodes 370 et 382 sont orientées dans le même sens.

La variante illustrée à la figure 13 permet de bloquer un courant pouvant provenir des bornes P et N, par exemple un courant de charge provenant d'un chargeur. A cet effet, l'interrupteur 376 inclut ici deux transistors 371 a et 371 b montés tête bêche en série (en l'occurrence des transistors Mosfet), présentant des diodes internes en antiparallèle. Le transistor 371 b permet de bloquer le courant entre sources primaires 4 en présence d'une telle différence de tension. Cette sécurité supplémentaire induit cependant davantage de pertes en régime nominal. Un tel interrupteur 376 permet avantageusement de procéder sélectivement à une récupération d'énergie de la charge électrique vers la ou les sources primaires 4.

Les figures 14 et 15 illustrent deux variantes simplifiées de l'interrupteur 376 de la figure 13. Dans l'exemple illustré à la figure 14, le transistor 371 b est remplacé par une diode 377, et le transistor 371 a est remplacé par un transistor bipolaire ou un IGBT 371. Dans l'exemple illustré à la figure 15, le transistor 371 b est remplacé par une diode 377, et le transistor 378 est identique au transistor 371 a. Ces variantes ne permettent pas de procéder à une recharge des sources primaires 4 par la charge électrique mais présentent des structures simplifiées.

La figure 16 est un diagramme tension/courant schématique du fonctionnement avec un convertisseur détaillé en référence aux figures 12 et 13, vu depuis la charge électrique alimentée. Une première zone de fonctionnement Z1 correspond au régime nominal de la source primaire 4. Les interrupteurs 321 et 322 sont alors commandés en modulation de largeur d'impulsion et l'interrupteur 376 est maintenu fermé. Une deuxième zone de fonctionnement Z2 correspond à un régime transitoire à courant constant, la tension étant variable pour charger par exemple des condensateurs d'un onduleur connecté entre les bornes P et N. L'interrupteur 376 est alors commandé en modulation de largeur d'impulsion. Une troisième zone de fonctionnement Z3 correspond à un régime de court-circuit dans laquelle la tension est quasiment nulle et le courant de décharge est limité, l'interrupteur 376 étant alors commandé en modulation de largeur d'impulsion.

Bien que l'invention ait été décrite avec des cellules électrochimiques du type accumulateurs électrochimiques, l'invention s'applique également à d'autres cellules électrochimiques, telles que des cellules de piles à combustible.

**Revendications**

1. Source de tension continue (2) de puissance présentant deux bornes de sortie distinctes (P-N), **caractérisée en ce qu'**elle comprend :

   - des premières cellules électrochimiques (41) connectées électriquement en série ;
   - un convertisseur continu/continu (32) connecté en série avec lesdites premières cellules électrochimiques de sorte que la différence de potentiel entre lesdites deux bornes de sortie (P-N) de la source de tension corresponde au cumul de la différence de potentiel aux bornes de la connexion en série des cellules électrochimiques et de la différence de potentiel aux bornes d'une interface de sortie du convertisseur ;
- une source secondaire de tension continue (31) appliquant sa différence de potentiel sur une interface d'entrée du convertisseur (32).

2. Source de tension continue (2) selon la revendication 1, dans laquelle la différence de potentiel aux bornes de la connexion en série des premières cellules électrochimiques (41) est entre 4 et 20 fois supérieure à la tension appliquée par la source secondaire (31) de tension continue sur l'interface d'entrée du convertisseur.

3. Source de tension continue selon la revendication 1 ou 2, dans lequel la source secondaire de tension continue (31) inclut au moins une deuxième cellule électrochimique de même type que les premières cellules électrochimiques (41).

4. Source de tension continue selon la revendication 3, dans lequel ledit convertisseur (32) présente une structure d'abaisseur de tension lors de la décharge de ladite deuxième cellule électrochimique (31).

5. Source de tension continue selon la revendication 4, dans lequel :

   - ladite structure d'abaisseur de tension inclut un abaisseur de tension à découpage comprenant deux interrupteurs commandés (321, 322) connectés en série et aux bornes desquels la différence de potentiel de la source secondaire de tension continue (31) est appliquée, chacun desdits deux interrupteurs commandés comportant une diode de roue libre (382) ;
   - ledit convertisseur (32) inclut :

      - un interrupteur (376) commandé par un circuit de commande de limitation de courant, comportant une diode de roue libre (370) et présentant des première et deuxième bornes, la première borne étant connectée à un noeud de connexion entre les interrupteurs commandés (321, 322) de l'abaisseur ;
      - une diode de roue libre (373) connectée entre une desdites bornes de sortie de la source de tension (N) continue et la deuxième borne de l'interrupteur commandé (376) ;
      - une inductance (374) connectée entre la deuxième borne de l'interrupteur commandé et l'autre borne de sortie (P) de la source de tension continue.

6. Source de tension continue selon la revendication 5, dans lequel ledit interrupteur (376) inclut deux transistors montés tête-bêche en série entre ledit noeud de connexion et l'inductance.

7. Source de tension continue selon l'une quelconque des revendications précédentes, dans laquelle la différence de potentiel aux bornes de la connexion en série des premières cellules électrochimiques (41) est supérieure à 100V.

8. Source de tension continue selon l'une quelconque des revendications précédentes, dans laquelle la différence de potentiel aux bornes de la source secondaire de tension continue est inférieure à 100V.

9. Source de tension continue selon l'une quelconque des revendications précédentes, dans laquelle le convertisseur (32) inclut un transformateur à isolation galvanique.

10. Source de tension continue (2) selon l'une quelconque des revendications précédentes, dans laquelle lesdites premières cellules électrochimiques sont des accumulateurs électrochimiques (41).

11. Source de tension continue selon la revendication 10, dans laquelle lesdits accumulateurs électrochimiques sont inclus dans plusieurs batteries (mod2, Mod3) connectées en série, chaque batterie comprenant plusieurs accumulateurs électrochimiques connectés en série, chaque batterie comprenant des premiers et deuxième pôles de sortie de puissance, la source de tension continue comprenant :

   - des dispositifs de sécurisation, chaque dispositif de sécurisation étant associé à une batterie respective parmi lesdites batteries et comprenant :

      - des premier et deuxième interrupteurs (121, I22), le premier interrupteur étant un interrupteur normalement ouvert (I21), le deuxième interrupteur étant un interrupteur normalement fermé (I22), une tension d'alimentation de ladite batterie (Mod2) étant appliquée comme signal de commande de fermeture par défaut du deuxième interrupteur (I22) ;
      - des première et deuxième branches connectées en parallèle entre les premier et deuxième pôles de sortie de puissance (P1, P2) de la batterie, la première branche incluant ladite batterie (Mod2) et l'interrupteur normalement ouvert (I21) connectés en série, la deuxième branche étant sélectivement ouverte/fermée par l'interrupteur normalement fermé (I22) ;

- un circuit de commande déterminant un niveau de tension devant être fourni par la source de tension continue, déterminant un nombre N de dispositifs de sécurisation à activer pour fournir le niveau de tension déterminé, forçant la fermeture des premiers interrupteurs et forçant l'ouverture des deuxièmes interrupteur pour les N dispositifs de sécurisation déterminés.

12. Source de tension continue selon l'une quelconque des revendications précédentes, comprenant un circuit de commande connecté audit convertisseur (32) et configuré pour appliquer au convertisseur un signal de consigne de sa différence de potentiel sur l'interface de sortie.

13. Source de tension continue selon la revendication 12, dans laquelle le convertisseur comprend :

- des premier et deuxième interrupteurs (321, 322) connectés en série ;
- une inductance (323) connectée à un noeud de connexion entre les premiers et deuxième interrupteurs ;
- ledit circuit de commande est configuré pour ouvrir le premier interrupteur et fermer simultanément le deuxième interrupteur avec un rapport cyclique définissant la tension de sortie du convertisseur.

14. Système, comprenant :

- plusieurs sources de tension continue (3A, 4A, 3B, 4B) selon la revendication 12 connectées en parallèle par l'intermédiaire de contacteurs (35A, 36A, 35B, 36B) ;
- un circuit de supervision (6) configuré pour fournir une même tension de consigne à chacune desdites sources de tension continue et pour ouvrir/fermer lesdits contacteurs.

15. Système, comprenant :

- une source de tension continue selon l'une quelconque des revendications 1 à13;
- un disjoncteur connecté en série avec l'inductance (374) entre lesdites deux bornes de sortie, l'interrupteur commandé (376) par le circuit de commande de limitation de courant étant commandé de façon à limiter le courant traversant le disjoncteur à une valeur inférieure au pouvoir de coupure de ce disjoncteur.

**Patentansprüche**

1. Gleichspannungsleistungsquelle (2), die zwei verschiedene Ausgangsanschlüsse (P-N) aufweist, **da-**

**durch gekennzeichnet, dass** sie Folgendes umfasst:

- erste elektrochemische Zellen (41), die elektrisch in Reihe geschaltet sind;
- einen Gleichstrom/Gleichstrom-Umsetzer (32), der mit den ersten elektrochemischen Zellen in Reihe geschaltet ist, derart, dass die Potentialdifferenz zwischen den zwei Ausgangsanschlüssen (P-N) der Spannungsquelle der Summe aus der Potentialdifferenz an den Anschlüssen der Reihenschaltung der elektrochemischen Zellen und der Potentialdifferenz an den Anschlüssen einer Ausgangsschnittstelle des Umsetzers entspricht;
- eine sekundäre Gleichspannungsquelle (31), die ihre Potentialdifferenz an eine Eingangsschnittstelle des Umsetzers (32) anlegt.

2. Gleichspannungsquelle (2) nach Anspruch 1, wobei die Potentialdifferenz an den Anschlüssen der Reihenschaltung der ersten elektrochemischen Zellen (41) im Bereich des 4- bis 20-Fachen der Spannung liegt, die von der sekundären Gleichspannungsquelle (31) an die Eingangsschnittstelle des Umsetzers angelegt wird.

3. Gleichspannungsquelle nach Anspruch 1 oder 2, wobei die sekundäre Gleichspannungsquelle (31) wenigstens eine zweite elektrochemische Zelle desselben Typs wie die ersten elektrochemischen Zellen (41) enthält.

4. Gleichspannungsquelle nach Anspruch 3, wobei der Umsetzer (32) eine Struktur zum Absenken der Spannung bei der Entladung der zweiten elektrochemischen Zelle (31) aufweist.

5. Gleichspannungsquelle nach Anspruch 4, wobei:

- die Spannungsabsenkungsstruktur einen Kappungsspannungsabsenker enthält, der zwei gesteuerte Unterbrecher (321, 322) umfasst, die in Reihe geschaltet sind und an deren Anschlüsse die Potentialdifferenz der sekundären Gleichspannungsquelle (31) angelegt wird, wobei die zwei gesteuerten Unterbrecher eine Freilaufdiode (382) enthalten;
- der Umsetzer (32) Folgendes umfasst:

- einen Unterbrecher (376), der durch eine Strombegrenzungssteuerschaltung gesteuert wird und eine freilaufende Diode (370) umfasst und einen ersten und einen zweiten Anschluss aufweist, wobei der erste Anschluss an einen Verbindungsknoten zwischen den gesteuerten Unterbrechern (321, 322) des Absenkers angeschlossen ist;
- eine freilaufende Diode (373), die zwischen die Ausgangsanschlüsse der Gleichspannungsquelle (N) und den zweiten Anschluss des gesteuerten Unterbrechers (376) geschaltet ist;
- eine Induktivität (374), die zwischen den zweiten Anschluss des gesteuerten Unterbrechers und den anderen Ausgangsanschluss (P) der Gleichspannungsquelle geschaltet ist.

6. Gleichspannungsquelle nach Anspruch 5, wobei der Unterbrecher (376) zwei Transistoren enthält, die zwischen dem Verbindungsknoten und der Induktivität entgegengesetzt in Reihe geschaltet sind.

7. Gleichspannungsquelle nach einem der vorhergehenden Ansprüche, wobei die Potentialdifferenz an den Anschlüssen der Reihenschaltung der ersten elektrochemischen Zellen (41) größer als 100 V ist.

8. Gleichspannungsquelle nach einem der vorhergehenden Ansprüche, wobei die Potentialdifferenz an den Anschlüssen der sekundären Gleichspannungsquelle kleiner als 100 V ist.

9. Gleichspannungsquelle nach einem der vorhergehenden Ansprüche, wobei der Umsetzer (32) einen Transformator mit galvanischer Isolation enthält.

10. Gleichspannungsquelle (2) nach einem der vorgehenden Ansprüche, wobei die ersten elektrochemischen Zellen elektrochemische Akkumulatoren (41) sind.

11. Gleichspannungsquelle nach Anspruch 10, wobei die elektrochemischen Akkumulatoren in mehreren Batterien (mod2, Mod3), die in Reihe geschaltet sind, enthalten sind, wobei jede Batterie mehrere in Reihe geschaltete elektrochemische Akkumulatoren enthält, wobei jede Batterie erste und zweite Leistungsausgangspole enthält, wobei die Gleichspannungsquelle Folgendes umfasst:

- Sicherungsvorrichtungen, wobei jede Sicherungsvorrichtung einer entsprechenden Batterie der Batterien zugeordnet ist und Folgendes umfasst:

- einen ersten und einen zweiten Unterbrecher (I21, I22), wobei der erste Unterbrecher ein normalerweise geöffneter Unterbrecher (I21) ist, der zweite Unterbrecher ein normalerweise geschlossener Unterbrecher (I22) ist und eine Versorgungsspannung der Batterie (Mod2) als Steuersignal zum voreingestellten Schließen des zweiten Unterbrechers (I22) angelegt wird;
- einen ersten und einen zweiten Zweig, die zwischen dem ersten und dem zweiten Leistungsausgangspol (P1, P2) der Batterie parallel geschaltet sind, wobei der erste Zweig die Batterie (Mod2) und den normalerweise geöffneten Unterbrecher (I21), die in Reihe geschaltet sind, enthält, wobei der zweite Zweig durch den normalerweise geschlossenen Unterbrecher (I22) wahlweise geöffnet/geschlossen wird;
- eine Steuerschaltung, die einen Spannungspegel bestimmt, der von der Gleichspannungsquelle geliefert werden soll, und eine Anzahl N von Sicherungsvorrichtungen bestimmt, die aktiviert werden sollen, um den bestimmten Spannungspegel zu liefern, und die das Schließen der ersten Unterbrecher und das Öffnen der zweiten Unterbrecher für die N bestimmten Sicherungsvorrichtungen steuert.

12. Gleichspannungsquelle nach einem der vorhergehenden Ansprüche, die eine Steuerschaltung umfasst, die mit dem Umsetzer (32) verbunden ist und konfiguriert ist, an den Umsetzer ein Stellsignal für seine Potentialdifferenz an der Ausgangsschnittstelle anzulegen.

13. Gleichspannungsquelle nach Anspruch 12, wobei der Umsetzer Folgendes umfasst:

- einen ersten und einen zweiten Unterbrecher (321, 322), die in Reihe geschaltet sind;
- eine Induktivität (323), die mit einem Verbindungsknoten zwischen dem ersten und dem zweiten Unterbrecher verbunden ist;
- wobei die Steuerschaltung konfiguriert ist, mit einem Tastverhältnis, das die Ausgangsspannung des Umsetzers definiert, gleichzeitig den ersten Unterbrecher zu öffnen und den zweiten Unterbrecher zu schließen.

14. System, das Folgendes umfasst:

- mehrere Gleichspannungsquellen (3A, 4A, 3B, 4B) nach Anspruch 12, die über Kontaktgeber (35A, 36A, 35B, 36B) parallel geschaltet sind;
- eine Überwachungsschaltung (6), die konfiguriert ist, dieselbe Stellspannung an jede der Gleichspannungsquellen zu liefern und die Kontaktgeber zu öffnen/zu schließen.

15. System, das Folgendes umfasst:

- eine Gleichspannungsquelle nach einem der Ansprüche 1 bis 13;
- einen Schutzschalter, der zwischen den zwei Ausgangsanschlüssen mit der Induktivität (374) in Reihe geschaltet ist, wobei der durch die Strombegrenzungssteuerschaltung gesteuerte Unterbrecher (376) in der Weise gesteuert wird, dass er den Strom, der durch den Schutzschalter fließt, auf einen Wert begrenzt, der kleiner als die Abschaltfähigkeit dieses Schutzschalters ist.

**Claims**

1. DC voltage power source (2) provided with two separate output terminals (P-N), **characterized in that** it comprises:

   - first electrochemical cells (41) electrically connected in series;
   - a DC/DC converter (32) connected in series to said first electrochemical cells, such that the potential difference between said output terminals (P-N) of the voltage source corresponds to the cumulation of the potential difference at the terminals of the series connection of the electrochemical cells and the potential difference at the terminals of one output interface of the converter;
   - a secondary DC voltage source (31) applying its potential difference to one input interface of the converter (32).

2. DC voltage source (2) according to Claim 1, in which the potential difference at the terminals of the series connection of the first electrochemical cells (41) is between 4 and 20 times greater than the voltage applied by the secondary DC voltage source (31) to the input interface of the converter.

3. DC voltage source according to Claim 1 or 2, in which the secondary DC voltage source (31) incorporates at least one second electrochemical cell of the same type as the first electrochemical cells (41).

4. DC voltage source according to Claim 3, in which said converter (32) has a voltage step-down structure during the discharging of said second electrochemical cell (31).

5. DC voltage source according to Claim 4, in which:

   - said voltage step-down structure incorporates a step-down voltage switching circuit comprising two controlled switches (321, 322) connected in series, at the terminals of which the potential difference of the secondary DC voltage source (31) is applied, whereby each of said two controlled switches comprises a freewheeling diode (382);

   - said converter (32) incorporates:

     - a switch (376) controlled by a current-limiting command circuit, comprising a freewheeling diode (370) and provided with first and second terminals, whereby the first terminal is connected to a connecting node between the controlled switches (321, 322) of the step-down;
     - a freewheeling diode (373) connected between one of said output terminals of the DC voltage source (N) and the second terminal of the controlled switch (376);
     - an inductance (374) connected between the second terminal of the controlled switch and the other output terminal (P) of the DC voltage source.

6. DC voltage source according to Claim 5, in which said switch (376) incorporates two transistors arranged head-to-tail in series between said connecting node and the inductance.

7. DC voltage source according to any of the above claims, in which the potential difference at the terminals of the series connection of the first electrochemical cells (41) is greater than 100 V.

8. DC voltage source according to any of the above claims, in which the potential difference at the terminals of the secondary DC voltage source is lower than 100 V.

9. DC voltage source according to any of the above claims, in which the converter (32) incorporates a galvanic isolation transformer.

10. DC voltage source (2) according to any of the above claims, in which said first electrochemical cells are electrochemical accumulators (41).

11. DC voltage source according to Claim 10, in which said electrochemical accumulators are incorporated in a number of batteries (Mod2, Mod3) connected in series, whereby each battery comprises a number of electrochemical accumulators connected in series, each battery comprises first and second power output poles, and the DC voltage source comprises:

    - safety devices, wherein each safety device is associated with one battery respectively of said batteries, and comprises:

      - first and second switches (I21, I22), whereby the first switch is a normally open switch (I21), the second switch is a normally closed switch (I22), and a supply voltage of said battery (Mod2) is applied as a command signal for the default closure of the second switch (I22);

- first and second branches connected in parallel between the first and second power output poles (P1, P2) of the battery, whereby the first branch incorporates said battery (Mod2) and the normally open switch (I21) connected in series, and the second branch is selectively opened/closed by the normally closed switch (I22);

- a command circuit for the determination of a voltage level to be supplied by the DC voltage source, defining a number N of safety devices to be activated for the delivery of the voltage level determined, effecting the override closure of the first switches and the override opening of the second switches in the N safety devices determined.

**12.** DC voltage source according to any of the above claims, comprising a command circuit connected to said converter (32) and configured for the application to the converter of a setpoint signal for the potential difference thereof on the output interface.

**13.** DC voltage source according to Claim 12, in which the converter comprises:

- first and second switches (321, 322) connected in series;
- an inductance (323) connected to a connecting node between the first and second switches;
- whereby said command circuit is configured for the opening of the first switch and the simultaneous closure of the second switch, with a cyclical ratio which defines the output voltage of the converter.

**14.** System, comprising:

- a number of DC voltage sources (3A, 4A, 3B, 4B) according to Claim 12, connected in parallel by means of contactors (35A, 36A, 35B, 36B);
- a monitoring circuit (6) configured for the delivery of the same setpoint voltage to each of said DC voltage sources, and for the opening/closure of said contactors.

**15.** System, comprising:

- a DC voltage source according to any of Claims 1 to 13;
- a circuit-breaker connected in series with the inductance (374) between said two output terminals, whereby the switch (376) controlled by the current-limiting command circuit is controlled so as to limit the current flowing in the circuit-breaker to a value which is lower than the breaking capacity of this circuit-breaker.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

376

321

31

322

374  372

373

371a    371b

4    Vp

P

N

32

Fig. 14

376

377

371

Fig. 15

376

377

378

Fig. 16

U

Z1

Z2

I

Z3

**EP 2 781 001 B1**

**Documents brevets cités dans la description**

- EP 2053717 A